(19) Europäisches Patentamt
European Patent Office
Office européen des brevets

(11) Veröffentlichungsnummer : **0 049 008**
**B1**

(12) # EUROPÄISCHE PATENTSCHRIFT

(45) Veröffentlichungstag der Patentschrift : **13.03.85**

(51) Int. Cl.$^4$ : **C 01 B 17/04**, B 01 D 53/34

(21) Anmeldenummer : **81200904.1**

(22) Anmeldetag : **13.08.81**

(54) **Verfahren zur Verminderung des Schwefelgehaltes der bei der Schwefelgewinnung erhaltenen Abgase.**

(30) Priorität : **25.09.80 DE 3036132**

(43) Veröffentlichungstag der Anmeldung : **07.04.82 Patentblatt 82/14**

(45) Bekanntmachung des Hinweises auf die Patenterteilung : **13.03.85 Patentblatt 85/11**

(84) Benannte Vertragsstaaten : **BE DE FR GB NL**

(56) Entgegenhaltungen :
**DE-A- 1 914 425**
**DE-A- 2 319 532**
**FR-A- 2 093 713**
**FR-A- 2 101 568**
**FR-A- 2 212 290**
**GB-A- 905 365**
**US-A- 3 026 184**
**US-A- 4 100 266**

(73) Patentinhaber : **METALLGESELLSCHAFT AG**
**Reuterweg 14 Postfach 3724**
**D-6000 Frankfurt/M.1 (DE)**

(72) Erfinder : **Schlauer, Johann, Dipl.-Ing.**
**Zwischenstrasse 11**
**D-6000 Frankfurt am Main (DE)**
Erfinder : **Fischer, Herbert**
**Holzmühler Weg 67**
**D-6304 Lollar (Giessen) (DE)**
Erfinder : **Kriebel, Manfred, Dr.-Ing.**
**Tiroler Strasse 61**
**D-6000 Frankfurt am Main (DE)**

(74) Vertreter : **Fischer, Ernst, Dr.**
**Reuterweg 14**
**D-6000 Frankfurt am Main 1 (DE)**

EP 0 049 008 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zum Entfernen der Schwefelverbindungen $H_2S$ und $SO_2$ aus dem Abgas einer Claus-Anlage, in der man ein saures, $H_2S$-haltiges Gas mit Sauerstoff und $SO_2$ umgesetzt hat, durch chemischen Umsatz der im Abgas enthaltenen Schwefelverbindungen in einer Entschwefelungsanlage zu elementarem Schwefel und Abtrennen des Schwefels, wobei man durch geregeltes Zudosieren eines Teilstromes des sauren, $H_2S$-haltigen Gases im der Entschwefelungsanlage aufgegebenen Gasgemisch das Verhältnis $H_2 : SO_2$ einstellt.

Ein solches Verfahren ist aus US-A-4 100 266 bekannt, Dabei analysiert man die Zusammensetzung des Abgases und gibt stromabwärts von der Analysenstelle eine geregelte Menge des sauren, $H_2S$-haltigen Gases zu, um ein $H_2S : SO_2$-Mol-Verhältnis größer 2,0 und vorzugsweise von 2,3 im der Entschwefelungsanlage aufgegebenen Gas einzustellen. Die Regelung erfolgt im bekannten Verfahren computergesteuert.

Das bekannte Verfahren der DE-A-23 19 532 betrifft hauptsächlich die Regenerierung des Katalysators einer Entschwefelungsanlage zum Verarbeiten von Abgas, z. B. von einer Claus-Anlage. Vor der Entschwefelungsanlage wird das Abgas durch Zugabe von $H_2S$ oder $SO_2$ oder aber durch Regulierung der Claus-Anlage in die Nähe des theoretischen Wertes 2,0 für das Mol-Verhältnis $H_2S : SO_2$ gebracht.

Es ist ferner bekannt, die Abgase des Claus-Prozesses unter Gewinnung von Schwefel dadurch zu reinigen, daß man die Abgase über aktive Adsorptionsmittel bei tieferer Temperatur leitet und das beladene Adsorptionsmittel mit heißen Gasen desorbiert, wobei man als Desorptionsgas Prozeßgas einsetzt. Dieses Prozeßgas wird im Kreislauf geführt, die restlichen Schwefelverbindungen werden verbrannt. Die zur Desorption des beladenen Adsorptionsmittels erforderliche Wärme gewinnt man durch Wärmeaustausch des Desorptionsgases mit erhitztem Abgas (DE-C-25 55 096).

Das stöchiometrische Verhältnis zwischen $H_2S$ und $SO_2$ von 2 : 1 in der Claus-Anlage wird durch die Regelung der Verbrennungsluftmenge zum Sauergasbrenner eingestellt. In der ersten Näherung wird die Luftmenge direkt proportional zu der Sauergasmenge geregelt. Mit dieser Regelung werden die Durchsatzänderungen vom Sauergas erfaßt, aber seine Zusammensetzung nicht. Wenn auch die Zusammensetzung des Sauergases bei der Luftregelung berücksichtigt werden soll, dann maß nicht nur $H_2S$, sondern es müssen alle brennbaren Bestandteile berücksichtigt werden. Der Meß- und Regelaufwand steigt dadurch erheblich.

Wegen der unvollständigen Verbrennung von Kohlenwasserstoffen beim Claus-Prozeß muß außerdem das $H_2S : SO_2$-Verhältnis im Abgas überwacht und die Luftmenge zum Brenner korrigiert werden. Nach dem Stand der Technik wird die Verbrennungsluftmenge oder ein Teilstrom davon entsprechend dem $H_2S : SO_2$-Verhältnis im Abgas geregelt. Ein wesentlicher Nachteil besteht dabei in der erheblichen Zeitspanne zwischen der Luftdosierung zum Brenner und ihrer Auswirkung auf das $H_2S : SO_2$-Verhältnis im Abgas. Entsprechend dieser Zeitverzögerung muß der Regelkreis langsam eingestellt werden, um eine Übersteuerung zu vermeiden.

Das hat zur Folge, daß eine Änderung der Sauergaszusammensetzung nur träge ausgeregelt wird. Eine Verkürzung der Zeit zwischen der Luftsteuerung und der Änderung des $H_2S : SO_2$-Verhältnisses durch Verlegen der Probennahmestelle vom Abgas näher zur Brennkammer versagt aus zwei Gründen :

1. Die $H_2S$- und $SO_2$-Konzentration steigt in dieser Richtung an, und das $H_2S : SO_2$-Verhältnis ändert sich dadurch weniger.

2. Infolge Nebenreaktionen, die an Claus-Katalysatoren ablaufen — wie z. B. die COS-Hydrolyse oder $SO_2$-Reduktion durch Wasserstoff-, ändert sich das $H_2S : SO_2$-Verhältnis in der Claus-Anlage.

Nach dem Stand der Technik läßt sich das $H_2S : SO_2$-Verhältnis im Abgas nicht auf 2 : 1 einstellen, was zu Schwefelverlusten und erhöhter Emission führt. Die Abweichung des $H_2S : SO_2$-Verhältnisses von 2 : 1 verursacht hohe Schwefelverluste besonders dann, wenn die Entschwefelung des Abgases durch die Fortsetzung der Claus-Reaktion

$$2\,H_2S + SO_2 \rightleftharpoons 3/n\,S_n + 2\,H_2O$$

und Entnahme des elementaren Schwefels durchgeführt wird.

Der Erfindung liegt die Aufgabe zugrunde, beim eingangs genannten Verfahren die nötige Regelung auf möglichst einfache Weise und mit kurzer Ansprechzeit durchzuführen. Die dazu erforderlichen Maßnahmen sind im Kennzeichen des Patentanspruchs 1 genannt. Hierbei wird die Claus-Anlage mit einem $H_2S : SO_2$-Mol-Verhältnis kleiner oder gleich 2 : 1 betrieben. Das erfindungsgemäße Verfahren kann auch für die Abgase mehrerer Claus-Anlagen verwendet werden, die man vereinigt einer gemeinsamen Entschwefelungsanlage zuführt.

Die mit der Erfindung erzielten Vorteile bestehen insbesondere darin, daß es nach einem einfachen und wirtschaftlichen Verfahren gelingt, die Schwefelemission einer Claus-Anlage zu vermindern. Das Verfahren erfordert keine fremden Chemikalien, Absorptions- oder Adsorptionsmittel. Es sind keine kostspieligen Investitionen erforderlich. Das Verfahren ermöglicht, vor Eintritt des Abgases in eine

Entschwefelungsanlage zwischen $H_2S$ und $SO_2$ das stöchiometrische Verhältnis von 2 : 1 einzustellen, was einen optimalen Umsatz zu elementarem Schwefel ergibt. Nach der Zudosierung von $H_2S$-haltigem Gas wird das stöchiometrische Verhältnis zwischen $H_2S$ und $SO_2$ mit einem Analysator überwacht und durch eine Regeleinrichtung so gesteuert, daß am Eintritt der Entschwefelungsanlage ein stöchiometrisches Verhältnis $H_2S : SO_2 = 2 : 1$ eingehalten wird. Der Vorteil besteht darin, daß das stöchiometrische Verhältnis an dieser Stelle ohne Verzögerung eingestellt wird. Die Luftmenge zum Brenner der Claus-Anlage kann entsprechend dem Stand der Technik geregelt werden.

Beide Regelkreise können schnell eingestellt werden, denn die Auswirkung eines Regeleingriffs wird ohne nennenswerte Verzögerung angezeigt. Bei einer genauen Einstellung des $H_2S : SO_2$-Verhältnisses auf 2 : 1 ist der Umsatz zum Elementarschwefel in der Abgasentschwefelungsanlage maximal. Der Schwefel kann abgezogen und das Abgas zur Nachverbrennung geleitet werden. Das Abgas aus der Abgasentschwefelungsanlage mit der erfindungsmäßigen Einstellung des $H_2S : SO_2$-Verhältnisses enthält wenig $H_2S$ und/oder $SO_2$. Da das Abgas über eine Nachverbrennung und einen Schornstein in die Atmosphäre abgeleitet wird, ermöglicht es die Erfindung, die $SO_2$-Emission zu senken.

Die Erfindung ist in den Zeichnungen schematisch und beispielsweise dargestellt und wird im folgenden näher beschrieben.

Es zeigen :

Figur 1 das Verfahren mit Zudosierung einer geregelten Menge eines $H_2S$-haltigen Gases in das die Claus-Anlage verlassende Abgas und

Figur 2 das Verfahren mit Zudosierung einer geregelten Menge eines $H_2S$-haltigen Gases vor der letzten Kontaktstufe einer mehrstufigen Claus-Anlage.

In den Figuren bedeuten :

1 Leitung für aufzuarbeitende, $H_2S$ enthaltende saure Gase ;
2 Zuführung für Luft ;
3 Claus-Anlage ;
4 Abzug Schwefel ;
5 Leitung für Abgas ;
6 Teilstrom von aufzuarbeitenden, $H_2S$-haltigen sauren Gasen (Bypass) ;
7 Regeleinrichtung ;
8 Leitung zur Abgasentschwefelungsanlage ;
9 Analysator ;
10 Abgasentschwefelungsanlage ;
11 Abzug für Schwefel ;
12 Leitung zur Nachverbrennung und
13 letzte Kontaktstufe einer mehrstufigen Claus-Anlage.

Beispiel 1

Ein wasserdampfgesättigtes Gas mit der Zusammensetzung

86 Vol.-% $H_2S$
13 Vol.-% $CO_2$ und
1 Vol.-% Kohlenwasserstoff

gemäß Figur 1 wird in einer zweistufigen Claus-Anlage 3 in bekannter Weise zu Schwefel umgesetzt. Die Schwefelausbeute beträgt 96 %. Das Abgas 5 aus der Claus-Anlage enthält im Langzeitdurchschnitt, bezogen auf trockenes Gas bei 0 °C und 1,013 bar

| | | |
|---|---|---|
| $H_2S$ | 14,4 g S/m³ | (0,66 Vol.-%) |
| $SO_2$ | 7,2 g S/m³ | (0,33 Vol.-%) |
| $COS + CS_2$ | 0,5 g S/m³ | |
| $S_{2-8}$ | 4,5 g S/m³ | |
| Verlust | 26,6 g S/m³ | |

Erfindungsgemäß wird dem Abgas 5 ein $H_2S$-haltiges Gas so zugespeist, daß am Eintritt der Abgasentschwefelungsanlage 10 ein stöchiometrisches Verhältnis $H_2S : SO_2 = 2 : 1$ eingehalten wird. Das $H_2S$-haltige Gas wird als Teilstrom des Sauergases vor der Claus-Anlage 3 abgezweigt, über einen Bypass 6 um die Claus-Anlage 3 geführt, geregelt und dem Abgas 5 zugespeist. Von der Sauergasmenge werden 0 bis 2,6 % als Teilstrom über den Bypass 6 geführt. Die Claus-Anlage 3 wird dabei mit einem geringen Luftüberschuß betrieben, so daß das stöchiometrische Verhältnis $H_2S : SO_2$ in der Claus-Anlage 3 kleiner oder gleich 2 : 1 wird. Durch die Zuspeisung vom Teilstrom des Sauergases über den Bypass 6 wird das stöchiometrische Verhältnis schnell korrigiert und genauer auf das angestrebte Verhältnis $H_2S : SO_2 = 2 : 1$ eingestellt.

Dadurch wird erreicht, daß die Abweichungen von der Stöchiometrie so begrenzt werden, daß der Überschuß an $H_2S$ oder $SO_2$ im Abgas der Claus-Anlage 3 durchschnittlich 1,1 g $S/m^3$ beträgt.

Mit dem Teilstrom von 0-2,6 % des $H_2S$ enthaltenden sauren Gases können alle Schwankungen des $H_2S : SO_2$-Verhältnisses im Abgas im Bereich von 0,77 bis 2,0 korrigiert werden.

Durch das Einstellen des stöchiometrischen Verhältnisses im Abgas kann dieses in der Abgasentschwefelungsanlage 10 bis auf 3,2 g $S/m^3$ entschwefelt werden. Die Gesamtschwefelausbeute beträgt 99,5 %. Die erfindungsgemäße Aufarbeitung des Abgases 8 in der Entschwefelungsanlage 10 ist an diesem Umsatz zu 4,8 % beteiligt.

## Vergleichsbeispiel

Ein Gas 1 mit der Zusammensetzung gemäß Beispiel 1 wird in einer Claus-Anlage 3 zu Schwefel umgesetzt. Das die Claus-Anlage verlassende Abgas 5 hat die gleiche Zusammensetzung wie das Abgas in Beispiel 1.

Das $H_2S : SO_2$-Verhältnis schwankt jedoch, weil die Verbrennungsluft nicht schnell genug korrigiert werden kann. Im Langzeitdurchschnitt ist die Summe der $H_2S$- und $SO_2$-Konzentration wegen dieser Schwankungen um 5,1 g $S/m^3$ höher.

Dieses Abgas wird in 10 nach der Claus-Reaktion gemäß Beispiel 1 zu Schwefel umgesetzt.

Es wird ein Abgas 12 mit ebenfalls schwankender Zusammensetzung erzielt, weil das $H_2S$ mit $SO_2$ nur im Verhältnis 2 : 1 reagiert und der Überschuß an $H_2S$ oder $SO_2$ die Anlage fast unverändert passiert.

Weil das stöchiometrische Verhältnis $H_2S : SO_2$ schwankt, enthält das Abgas in 12 entweder das $H_2S$ oder das $SO_2$ im Überschuß, so daß im Langzeitdurchschnitt etwa folgende Zusammensetzung, bezogen auf trockenes Gas bei 0 °C und 1,013 bar, erreicht wird :

| | |
|---|---|
| $H_2S$ | 4,2 g $S/m^3$ |
| $SO_2$ | 2,1 g $S/m^3$ |
| $COS + CS_2$ | 0,5 g $S/m^3$ |
| $S_{2-8}$ | 0,1 g $S/m^3$ |
| Verlust | 6,9 g $S/m^3$ |

Diese Zusammensetzung entspricht einer 99,0-prozentigen Schwefelausbeute. Durch die Schwankungen wird eine Umsatzeinbuße von 0,7 % bzw. ein Schwefelverlust von 5,0 g $S/m^3$ verursacht.

Wie ein Vergleich zeigt, wandern die Schwankungen praktisch unverändert durch die Abgasanlage 10. Eine geringe Senkung um 0,1 g $S/m^3$ wird in der Abgasanlage 10 durch die Rückmischung des Gases und durch die Adsorption am festen Katalysator bewirkt. Durch die Schwankungen werden die Verluste auf 1,0 % erhöht, d. h. mehr als verdreifacht.

Wird gemäß Erfindung nach Beispiel 1 verfahren, können die Schwefelverluste auf 0,5 % verringert werden, d. h. die Schwefelemission wird um 50 % reduziert.

## Beispiel 2

Bei einer Erdgasaufbereitung fällt ein mit Wasserdampf gesättigtes Sauergas an, das 55 Vol.-% $H_2S$, 43 Vol.-% $CO_2$ und 2 Vol.-% $CH_4$ enthält und gemäß Fig. 2 in einer Claus-Anlage 3 mit angeschlossener Abgasentschwefelungsanlage 10 aufgearbeitet wird.

Erfindungsgemäß werden 0 bis 1,5 % der Sauergasmenge vor der Claus-Anlage 3 abgezweigt und als Teilstrom über einen Bypass 6 um die Claus-Anlage 3 geführt. Dieser Teilstrom wird über 7 geregelt und vor der letzten Kontaktstufe 13 der dreistufigen Claus-Anlage 3 zudosiert. Die Menge des $H_2S$-haltigen Teilstromes wird so geregelt, daß ein stöchiometrisches Verhältnis zwischen $H_2S$ und $SO_2$ von 2 : 1 in dem die Claus-Anlage verlassenden Abgas 5 eingestellt wird. Dem Brenner der Claus-Anlage wird ein leichter Luftüberschuß über Leitung 2 zugeführt, so daß die Claus-Anlage 3 mit einem $H_2S : SO_2$-Verhältnis von kleiner oder gleich 2 : 1 betrieben wird.

Durch die erfindungsgemäße Zuspeisung eines Teilstroms des Sauergases über den Bypass 6 wird das stöchiometrische Verhältnis schnell korrigiert und genauer auf das angestrebte Verhältnis $H_2S : SO_2 = 2$ eingestellt, da die vorgenommene Korrektur mit einem geringen Zeitverlust in 9 angezeigt wird und der Regler 7 für den Teilstrom schnell eingestellt werden kann.

Durch diese Vorteile des erfindungsgemäßen Verfahrens werden die Abweichungen von der Stöchiometrie so begrenzt, daß der Überschuß an $H_2S$ oder $SO_{23}$ im Abgas 8 der Claus-Anlage 3 durchschnittlich 0,5 g $S/m^3$ beträgt. Das Abgas 8 enthält, bezogen auf 1 $m^3$ bei 0 °C, 1,013 bar und trocken, durchschnittlich

| | |
|---|---|
| $H_2S$ | 6,6 g $S/m^3$ |
| $SO_2$ | 3,3 g $S/m^3$ |
| $COS + CS_2$ | 0,5 g $S/m^3$ |
| $S_{2-8}$ | 4,5 g $S/m^3$ |
| | 14,9 g $S/m^3$ |

und das stöchiometrische Verhältnis zwischen $H_2S : SO_2$ variiert im Bereich von 1,6 bis 2,4. Das Abgas 8 wird einer Abgasanlage 10 zugeführt, in der man das $H_2S$ und $SO_2$ katalytisch zum Elementarschwefel umsetzt und den Schwefel bei 11 abzieht. Das Abgas 12 enthält einen Restgehalt von weniger als 2,5 g $S/m^3$, was einer Schwefelausbeute von über 99,5 % entspricht.

Vergleichsbeispiel

Dem Vergleich wird die gleiche Sauergaszusammensetzung und -menge sowie die gleiche Luftmenge wie im Beispiel 2 zugrundegelegt, wobei das stöchiometrische Verhältnis $H_2S : SO_2$ durch die Regelung der Luftmenge nach dem Stand der Technik eingestellt wird.

Die Schwefelausbeute der dreistufigen Claus-Anlage 3 beträgt 97,5 % und das Abgas 5 enthält im Langzeitdurchschnitt

| | | |
|---|---|---|
| $H_2S$ | 5,4 g $S/m^3$ | = 0,26 Vol.-% |
| $SO_2$ | 2,7 g $S/m^3$ | = 0,13 Vol.-% |
| $COS + CS_2$ | 0,4 g $S/m^3$ | |
| $S_{1-8}$ | 4,5 g $S/m^3$ | |
| | 13,0 g $S/m^3$ | |

Das stöchiometrische Verhältnis $H_2S : SO_2$ schwankt dabei zwischen 0,9 und 4,0. Nur selten ist es exakt 2 : 1. Bei dieser Schwankung ist entweder das $H_2S$ oder das $SO_2$ im Überschuß, wobei der Überschuß an $H_2S$ oder $SO_2$ durchschnittlich 2,1 g $S/m^3$ = 0,1 Vol.-% beträgt. Der $H_2S$- oder $SO_2$-Überschuß verringert die Ausbeute der Claus-Anlage 3 um 0,4 %.

Da das $H_2S$ mit $SO_2$ nur im Verhältnis 2 : 1 reagiert, verbleibt der Überschuß an $H_2S$ oder $SO_2$ in dem entschwefelten Abgas 12 erhalten. Während bei einer stöchiometrischen Fahrweise eine Schwefelausbeute von 99,6 % (entsprechend 0,4 % Verlust) erreichbar wäre, erhöht die $H_2S : SO_2$-Schwankung den Verlust durchschnittlich um 0,35 % auf 0,75 %. Ein Drittel der Verluste wird durch diese Schwankung verursacht. Die Schwefelausbeute beträgt 99,25 %, aber der Schwefelverlust und die $SO_2$-Emission sind um 50 % höher als bei dem erfindungsgemäßen Verfahren.

**Ansprüche**

1. Verfahren zum Entfernen der Schwefelverbindungen $H_2S$ und $SO_2$ aus dem Abgas einer Claus-Anlage, in der man ein saures, $H_2S$-haltiges Gas mit Sauerstoff und $SO_2$ umgesetzt hat, wobei die Anlage mit einem $H_2S : SO_2$ Mol-Verhältnis kleiner oder gleich 2 : 1 betrieben wird, durch chemischen Umsatz der im Abgas enthaltenen Schwefelverbindungen in einer Entschwefelungsanlage zu elementarem Schwefel und Abtrennen des Schwefels, wobei man durch geregeltes Zudosieren eines Teilstromes des sauren, $H_2S$-haltigen Gases im der Entschwefelungsanlage aufgegebenen Gasgemisch das Verhältnis $H_2S : SO_2$ einstellt, dadurch gekennzeichnet, daß man einen Anteil von unter 5 Vol.% des der Claus-Anlage zugeführten sauren, $H_2S$-haltigen Gases als Teilstrom abzweigt, den abgezweigten Teilstrom in geregelter Menge entweder

a) am Ausgang der Claus-Anlage deren Abgas oder

b) bei einer mehrstufigen Claus-Anlage zwischen der zweitletzten und der letzten Kontaktstufe dem umzusetzenden Gasgemisch

zudosiert, daß man stromabwärts vom Ort der Zudosierung des abgezweigten Teilstromes vor Eintritt in die Entschwefelungsanlage das Gasgemisch analysiert und die Menge des abgezweigten Teilstroms genau auf das stöchiometrische Mol-Verhältnis $H_2S : SO_2 = 2 : 1$ im Gasgemisch regelt.

2. Verfahren nach Anspruch 1, dadurch gekennzeichnet, daß man die Abgase aus mehreren Claus-Anlagen vereinigt einer gemeinsamen Entschwefelungsanlage zuführt.

**Claims**

1. A process of removing the sulfur compounds $H_2S$ and $SO_2$ from the exhaust gas of a Claus plant, wherein in said plant an acid, $H_2S$-containing gas was reacted with oxygen and $SO_2$, chemically reacting the sulfur compounds of the exhaust gas in a desulfurizing plant to form elementary sulfur which is withdrawn, the ratio of $H_2S : SO_2$ in the gas mixture fed into the desulfurizing plant is adjusted by adding a partial stream of the acid, $H_2S$-containing gas at a controlled rate, characterized in that a portion of below 5 percent by volume of the acid, $H_2S$-containing gas fed to the Claus plant is branched off as a partial stream, said partial stream is added at a controlled rate either

a) into the exhaust gas of the Claus plant at the exit of said plant, or

b) at a multi-stage Claus plant between the last stage and the stage before said last stage into the gas mixture to be reacted, the gas mixture is analysed at a location downstream of the place of adding

said branched-off partial stream and before entering the desulfurizing plant and the amount of said branched-off partial stream is adjusted to exactly maintain the stoichiometric molar ratio of 2 : 1 of $H_2S$ : $SO_2$ in the gas mixture.

2. Process of claim 1, characterized in that the exhaust gases of several Claus plants are combined and fed into a common desulfurizing plant.

**Revendications**

1. Procédé pour éliminer les composés soufrés $H_2S$ et $SO_2$ du gaz résiduaire d'une installation de Claus, dans laquelle on a fait réagir un gaz acide contenant du $H_2S$ sur de l'oxygène et du $SO_2$, l'installation fonctionnant avec un rapport molaire $H_2S$ : $SO_2$ inférieur ou égal à 2 : 1, par transformation chimique des composés soufrés contenus dans le gaz résiduaire en soufre élémentaire dans une installation de désulfuration et par séparation du soufre, le rapport $H_2S$ : $SO_2$ dans le mélange gazeux chargé dans l'installation de désulfuration, étant réglé par addition dosée et réglée d'un courant partiel du gaz acide contenant $H_2S$, caractérisé en ce qu'il consiste à dériver, à titre de courant partiel, une partie de moins de 5 % en volume du gaz acide contenant $H_2S$ envoyé à l'installation de Claus, à ajouter, de manière dosée et en une quantité réglée, le courant partiel dérivé,

a) soit au gaz résiduaire à la sortie de l'installation de Claus,

b) soit, dans le cas d'une installation de Claus à plusieurs étages, au mélange gazeux en réaction compris entre l'avant-dernier étage de contact et le dernier étage de contact, à analyser le mélange gazeux en aval de l'endroit d'addition de manière dosée du courant partiel dérivé en amont de l'entrée dans l'installation de désulfuration, et à régler la quantité du courant partiel dérivé, exactement au rapport molaire stœchiométrique $H_2S$ : $SO_2 = 2 : 1$ dans le mélange gazeux.

2. Procédé suivant la revendication 1, caractérisé en ce qu'il consiste à réunir les gaz résiduaires de plusieurs installations de Claus et à les envoyer à une installation de désulfuration commune.

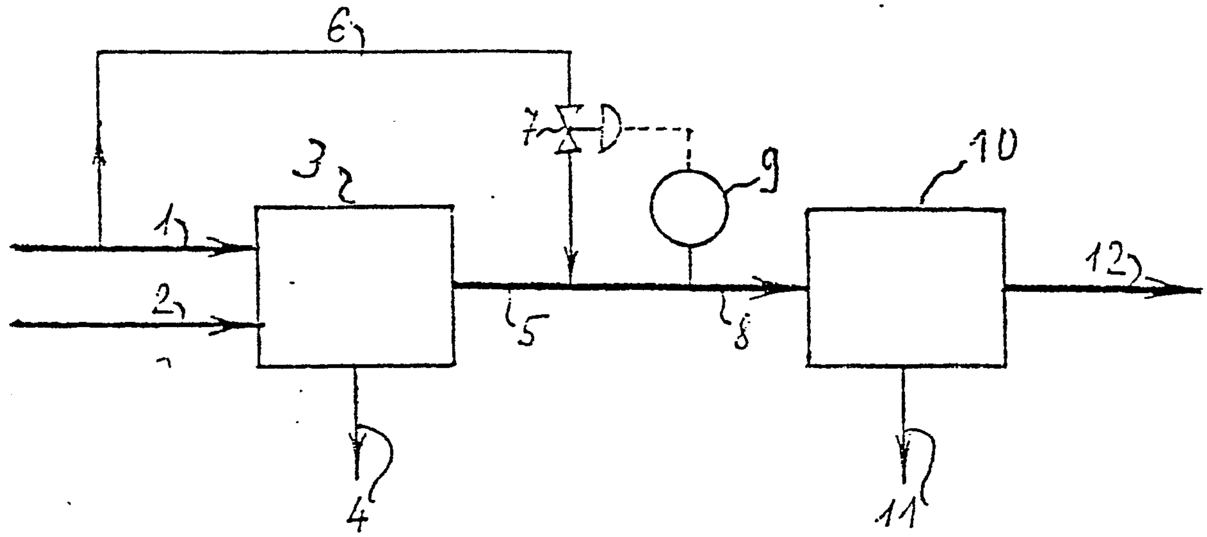


Fig. 1

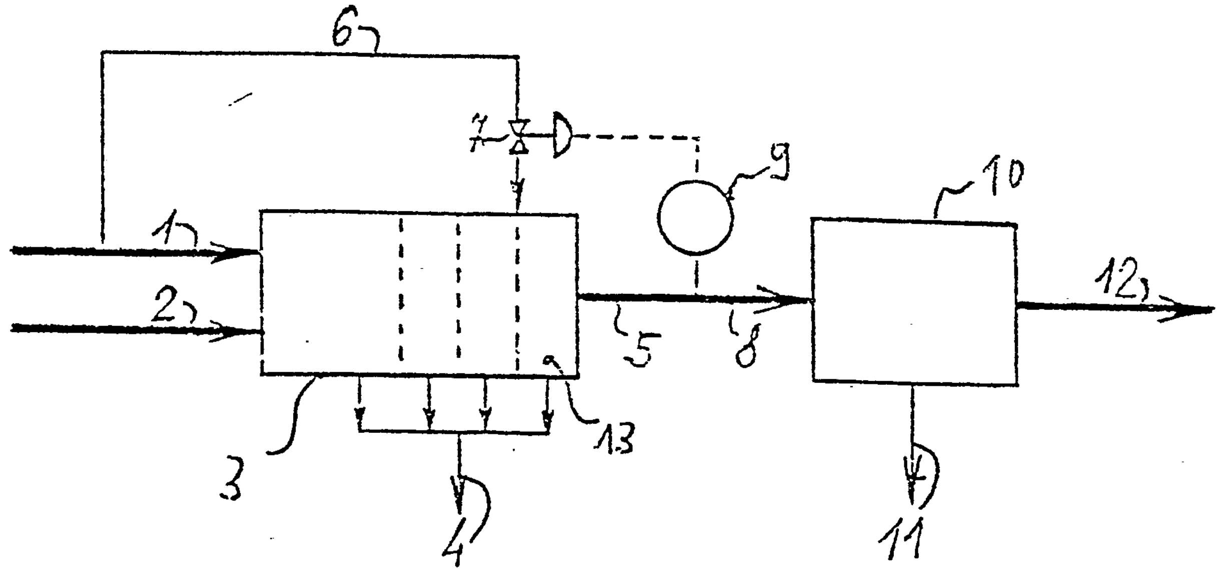


Fig. 2